# EUROPÄISCHE PATENTSCHRIFT

(11) **EP 4 494 819 B1**
(45) Veröffentlichungstag und Bekanntmachung des Hinweises auf die Patenterteilung: **03.06.2026**
(21) Anmeldenummer: 24186587.2
(22) Anmeldetag: 04.07.2024
(51) Int. Cl.: B25J 15/00, B25J 15/04, B25J 15/06, B25J 19/00, B65G 47/92

(54) **MAGNETGREIFER, GREIFREIHE, GREIFSYSTEM UND GREIFREIHENSYSTEM**
MAGNETIC GRIPPER, GRIPPING ROW, GRIPPING SYSTEM AND GRIPPING ROW SYSTEM
PRÉHENSEUR MAGNÉTIQUE, RANGÉE DE PRÉHENSION, SYSTÈME DE PRÉHENSION ET SYSTÈME DE RANGÉE DE PRÉHENSION

(30) Priorität: 20.07.2023 DE 102023119184
(43) Veröffentlichungstag der Anmeldung: 22.01.2025
(73) Patentinhaber: J. Schmalz GmbH, 72293 Glatten (DE)
(72) Erfinder: Clauß, Johannes, 75387 Neubulach (DE); Möginger, Helmut, 83064 Raubling (DE); Wennagel, Daniel, 72280 Dornstetten (DE)
(74) Vertreter: DREISS Patentanwälte PartG mbB

(56) Entgegenhaltungen:
- EP-A1- 0 154 227
- EP-B1- 3 532 855
- WO-A1-2022/214503
- CN-A- 112 388 661
- CN-U- 207 710 815
- CN-U- 213 859 329
- DE-A1- 102019 003 454
- JP-A- H05 177 574
- US-A1- 2012 133 371
- US-A1- 2021 031 317
- SCHMALZMEDIACENTER: "Powerful Magnetic Grippers for Hot Parts & Ferromagnetic Workpieces | Schmalz", 12 October 2016 (2016-10-12), pages Minute 1:32, XP093206023, Retrieved from the Internet <URL:https://www.youtube.com/watch?v=766-9o68TZs> [retrieved on 20240917]

## Beschreibung

Die Erfindung betrifft einen Magnetgreifer zum Greifen einer Batteriezelle, eine Greifreihe, ein Greifsystem und ein Greifreihensystem.

Magnetgreifer zum Greifen von Batteriezellen sind aus dem Stand der Technik grundsätzlich bekannt. Solche Magnetgreifer weisen üblicherweise eine Anlagefläche zum Kontaktieren der zu greifenden Batteriezelle und einen Magnet zur Bereitstellung einer Magnetwirkung an der Anlagefläche zum Zweck des Greifens der Batteriezelle auf.

CN 210392833 U zeigt einen Magnetgreifer zum Greifen eines Batteriekerns. Der Magnetgreifer hat eine magnetische Backe mit einer Greifrille, die dazu verwendet wird, um den Batteriekern anzuziehen. In einem gegriffenen Zustand liegt der Batteriekern mit einem Abschnitt der Mantelfläche an der Backe an. Eine Anlagefläche ist dabei an eine Außenkontur der Mantelfläche des Batteriekerns angepasst.

EP 3 532 855 B1 beschreibt einen Batteriegreifer zum Greifen und Verlagern einer Batteriezelle. Der Batteriegreifer hat eine Saugeinheit zum Greifen der Batteriezelle. Zusätzlich hat der Batteriegreifer eine Hebevorrichtung und Prüf- und/oder Messeinheiten zur Prüfung und/oder Messung der Batteriezelle. Die Hebevorrichtung ist in einer Messeposition verlagerbar, in welcher Prüfungen und/oder Messungen an einer gegriffenen Batteriezelle durchgeführt werden.

CN 112 388 661 A zeigt eine Batteriekappen-Greifvorrichtung mit einem Magneten für das Greifen von Batteriedeckel mittels Magnetkraft.

EP 0 154 227 A1 offenbart ein Austauschsystem zum Verbinden eines Greifers mit einem Roboterarm. Das Austauschsystem hat eine obere Wechseleinheit, dessen Gehäuse aus Kunststoff besteht.

US 2012/133371 A1 beschreibt einen Magnetgreifer für das Greifen von Batteriezellen, die nebeneinander angeordnet sind.

CN 207 710 815 U zeigt eine Batteriegreifvorrichtung für das Greifen von Batterien. Die Batteriegreifvorrichtung hat eine Magnetreihe, die mittels eines Vertikalförderers von einer Trägerplatte weg oder auf die Trägerplatte zu bewegbar sind. Zu greifende Batterien werden von einem Magnetfeld der Magnetreihe mit einer Magnetkraft beaufschlagt, welche die Batterien gegen eine Trägerplatte drückt. An der Trägerplatte sind Greifstäben für das Greifen der Batterien angeordnet.

CN 213 859 329 U betrifft einen Magnetgreifer zum Greifen eines Batteriedeckels während der Herstellung einer Batterie. Der Magnetgreifer hat einen Magneten, der mittels Druckluft bis zu einem Anschlag bewegt wird, wenn ein Batteriedeckel gegriffen werden soll.

WO 2022/214503 A1 offenbart eine Haltevorrichtung für das Positionieren von Batteriezellen relativ zu einer Gießform. Die Haltevorrichtung kann die Batteriezellen magnetisch greifen. Die Haltevorrichtung hat eine Führungs- und/oder Ausrichtvorrichtung, mittels welcher mehrere Batteriezellen relativ zueinander positionierbar sind.

Die bekannten Lösungen sind jedoch vergleichsweise massiv aufgebaut und erfordern es üblicherweise, die Batterie in einer bestimmten Richtung an die Anlagefläche heranzuführen, was einen Greifvorgang kompliziert. Zudem besteht Verbesserungsbedarf hinsichtlich einer sicheren Handhabung der Batterie im gegriffenen Zustand.

Es ist Aufgabe der vorliegenden Erfindung, einen Magnetgreifer zum Greifen einer Batteriezelle bereitzustellen, der konstruktiv einfach aufgebaut ist und ein sicheres und zuverlässiges Greifen der Batteriezelle ermöglicht. Weiter ist es Aufgabe der vorliegenden Erfindung, eine Greifreihe, ein Greifsystem und ein Greifreihensystem bereitzustellen, die jeweils einen derartigen Magnetgreifer aufweisen.

Diese Aufgabe wird erfindungsgemäß durch einen Magnetgreifer mit den Merkmalen des Anspruchs 1 gelöst. Vorteilhafte Ausgestaltungen und Weiterbildungen der Erfindung ergeben sich aus den abhängigen Ansprüchen.

Ein erfindungsgemäßer Magnetgreifer ist zum Greifen einer Batteriezelle, insbesondere einer Batterierundzelle, ausgebildet. Der Magnetgreifer weist eine Anlagefläche, einen Magnet und eine Mehrzahl von Zentrierelementen auf. Die Anlagefläche ist zum Kontaktieren der zu greifenden Batteriezelle ausgebildet. Der Magnet ist zur Bereitstellung einer Magnetwirkung an der Anlagefläche zum Zweck des Greifens der Batteriezelle ausgebildet. Die Mehrzahl, insbesondere 3, 4 oder 6, von Zentrierelementen ist zum Führen der Batteriezelle zur Anlagefläche und insbesondere zum Zentrieren der Batteriezelle an der Anlagefläche ausgebildet. Die Zentrierelemente sind als Auskragungen ausgebildet. Die Zentrierelemente sind kronenartig um die Anlagefläche angeordnet. Die Zentrierelemente erstrecken sich jeweils zumindest abschnittsweise in eine von der Anlagefläche wegführende, insbesondere wegzeigende, Richtung erstrecken.

Die vorgeschlagene Ausgestaltung ermöglicht es, mit vergleichsweise geringem konstruktiven Aufwand, eine Batteriezelle auf einfache Weise sicher und zuverlässig zu greifen. Vorteilhafterweise kann die Batteriezelle beim Überführen in einen gegriffenen Zustand an mindestens einem Zentrierelement entlanggleiten und wird dabei von dem Zentrierelement relativ zu der Anlagefläche positioniert. Dadurch, dass die Zentrierelemente kronenartig um die Anlagefläche angeordnet sind, wird die Batteriezelle beim Führen zu der Anlagefläche insbesondere automatisch zentriert. Die Batteriezelle muss insofern nicht exakt relativ zu der Anlagefläche positioniert werden, was einen Greifprozess erleichtert. In einem gegriffenen Zustand ist die Batteriezelle dann von der Mehrzahl von Zentrierelementen in einer radialen Richtung umgeben, so dass bei einer Bewegung des Magnetgreifers, beispielsweise mittels eines Manipulators, ein ungewolltes Verlagern der gegriffenen Batteriezelle verhindert wird. Vorzugsweise wird die Batteriezelle derart positioniert, dass eine Stirnseite der Batteriezelle der Anlagefläche gegenüberliegend angeordnet ist. Wenn die Stirnseite der Batteriezelle der Anlagefläche gegenüberliegend angeordnet ist, kann die Batteriezelle optimal von dem Magnetgreifer gegriffen werden. Die vorgeschlagene Ausgestaltung der Zentrierelemente als Auskragungen ist auf konstruktiv einfache und kostengünstige Weise realisierbar. Zudem nimmt der vorgeschlagene Magnetgreifer nur einen vergleichsweise geringen Bauraum ein.

Die Batteriezelle kann als Akkumulator bezeichnet werden. Die Batteriezelle kann ein Akkumulator sein. Die Batteriezelle kann ferromagnetisch ausgebildet sein. Die Batterierundzelle kann eine zylinderförmige Form aufweisen.

Der Magnet kann ein Elektromagnet oder ein Permanentmagnet sein. Der Magnet kann aus mehreren Teilen zusammengesetzt sein. Der Magnet kann derart angeordnet sein, dass eine Magnetisierungsrichtung des Magneten orthogonal zu einer Längsrichtung des Magnetgreifers verläuft.

Unter Magnetwirkung kann verstanden werden, dass der Magnet ein Magnetfeld erzeugt, das dazu ausgebildet ist, die Batteriezelle mit einer Magnetkraft zum Zweck des Greifens der Batteriezelle zu beaufschlagen, insbesondere wenn die Batteriezelle die Anlagefläche kontaktiert.

Der Magnetgreifer kann einen Aktivzustand und einen Passivzustand aufweisen. In dem Aktivzustand kann der Magnet ein die Anlagefläche durchdringendes Magnetfeld erzeugen, das dazu ausgebildet ist, die zu greifende Batteriezelle mit einer auf die Anlagefläche gerichteten Magnetkraft zu beaufschlagen, die vorzugsweise größer als eine Gewichtskraft der Batteriezelle ist. In dem Passivzustand kann der Magnet kein Magnetfeld erzeugen oder zumindest kein Magnetfeld erzeugen, das dazu ausgebildet ist, die zu greifende Batteriezelle mit einer auf die Anlagefläche gerichteten Magnetkraft zu beaufschlagen, die größer als eine Gewichtskraft der Batteriezelle ist.

Unter der Anlagefläche wird insbesondere eine Fläche des Magnetgreifers verstanden, an welcher die gegriffene Batteriezelle anliegt. Die Anlagefläche kann als Kontaktfläche bezeichnet werden. Die Anlagefläche kann eben ausgebildet sein. Die Anlagefläche kann eine Stirnfläche des Magnetgreifers zumindest abschnittsweise bilden. Die Anlagefläche kann an einem Ende des Magnetgreifers angeordnet sein.

Die Mehrzahl von Zentrierelementen und die Anlagefläche können an einer Stirnseite des Magnetgreifers angeordnet sein. Die Mehrzahl von Zentrierelementen und die Anlagefläche sind vorzugsweise getrennt voneinander ausgebildet. Keines der Zentrierelemente kann die Anlagefläche aufweisen.

Unter Auskragung kann ein Zapfen, eine Zinne, ein Vorsprung oder ein Dom verstanden werden.

Kronenartig kann bedeuten, dass die Mehrzahl von Zentrierelementen um die Anlagefläche, insbesondere gleichmäßig, verteilt angeordnet sind. Mit anderen Worten, die Anlagefläche kann von der Mehrzahl von Zentrierelementen in einer radialen Richtung umgeben sein. Alternativ oder zusätzlich kann die Mehrzahl von Zentrierelementen umfangmäßig, insbesondere und gleichmäßig, verteilt um eine Längsachse des Magnetgreifers angeordnet sein.

Die Richtung kann einen geraden, insbesondere zur Anlagefläche senkrechten, Verlauf aufweisen. Die Richtung kann parallel zu der Längsachse des Magnetgreifers sein. Die Richtung kann von dem Magnet wegführen, insbesondere wegzeigen.

Der Magnetgreifer kann einen oder mehrere Anwesenheitssensoren aufweisen, die dazu ausgebildet sind, zu erfassen, ob sich die Batteriezelle an der Anlagefläche befindet und/oder an der Anlagefläche anliegt. Der Anwesenheitssensor kann als optischer Sensor oder als induktiver Sensor, insbesondere als Magnetfeldsensor, vorzugsweise Hall-Sensor, ausgebildet sein.

In einer vorteilhaften Weiterbildung des Magnetgreifers kann die Mehrzahl von Zentrierelementen von der Anlagefläche beabstandet sein. Ein Abstand zwischen der Anlagefläche und jedem Zentrierelement kann gleich oder größer sein als 1%, insbesondere 2% oder 3%, eines Umkreisradius eines Querschnitts des Magnetgreifers.

In einer vorteilhaften Weiterbildung des Magnetgreifers kann die Mehrzahl von Zentrierelementen durch einen Aufsatz bereitgestellt sein, welcher auf ein Gehäuse des Magnetgreifers aufsetzbar, insbesondere aufsteckbar oder aufschraubbar, ist. Eine solche Ausgestaltung ermöglicht es, die Zentrierelemente auf einfache Weise, bspw. bei Verschleiß, auszutauschen. Der Aufsatz kann beispielsweise durch ein Kunststoff-Spritzgussteil bereitgestellt sein. Die Anlagefläche kann durch den Aufsatz bereitgestellt sein. Die Anlagefläche kann auch von dem Aufsatz separat bereitgestellt sein.

In einer vorteilhaften Weiterbildung des Magnetgreifers kann die Mehrzahl von Zentrierelementen aus einem nicht magnetisierbaren Material gebildet sein. Vorteilhafterweise wird durch das nicht magnetisierbare Material ein Entstehen einer Magnetkraft in Richtung der Zentrierelemente verhindert, so dass beim Überführen in den gegriffenen Zustand die Batteriezelle mit einer Magnetkraft in Richtung der Anlagefläche beaufschlagt ist. Das nicht magnetisierbare Material kann ein Kunststoff, beispielsweise ein Polyamid, sein.

In einer Weiterbildung des Magnetgreifers können die Mehrzahl von Zentrierelementen und ein die Anlagefläche bereitstellender Anlageabschnitt des Magnetgreifers aus unterschiedlichen Materialien gebildet sein. Der Anlageabschnitt kann aus einem magnetisierbaren Material gebildet sein. Der Anlageabschnitt kann Eisen aufweisen.

In einer Weiterbildung des Magnetgreifers können die Mehrzahl von Zentrierelementen einen Aufnahmeraum für die zu greifende Batteriezelle definieren. Der Aufnahmeraum kann zylinderförmig ausgebildet sein. Die Mehrzahl von Zentrierelementen kann eine Öffnung definieren, durch die hindurch die Batteriezelle in den Aufnahmeraum einsetzbar ist. Die Öffnung kann kreisförmig ausgebildet sein.

In einer Weiterbildung des Magnetgreifers kann jedes Zentrierelement eine Einführungsschräge zum Führen der Batteriezelle zur Anlagefläche aufweisen. Die Einführungsschräge kann dazu ausgebildet sein, dass die Batteriezelle beim Überführen in den gegriffenen Zustand die Einführungsschräge entlang gleitet und durch das Entlanggleiten der Einführungsschräge zu der Anlagefläche geführt wird. Vorzugsweise wird die Batteriezelle derart zur Anlagefläche geführt, dass eine Stirnseite der Batteriezelle der Anlagefläche gegenüberliegend angeordnet ist. Die Einführungsschräge und die Richtung können zwischen sich einen Winkel von 5° bis 30°, insbesondere 10° bis 20°, aufweisen.

In einer Weiterbildung des Magnetgreifers kann die Anlagefläche kreisringförmig ausgebildet sein. Eine derartige Ausbildung der Anlagefläche kann besonders vorteilhaft für das Greifen der Batteriezelle sein.

In einer Weiterbildung des Magnetgreifers kann eine Oberfläche der Mehrzahl von Zentrierelementen zumindest teilweise oder abschnittsweise eine Mantelfläche des Magnetgreifers bilden. Die Mehrzahl von Zentrierelementen können an einem äußersten Randbereich eines Querschnitts des Magnetgreifers angeordnet sein.

In einer Weiterbildung des Magnetgreifers kann der Magnetgreifer eine Manipulator-Schnittstelle zum Befestigen des Magnetgreifers an einem Manipulator, bspw. Roboter, aufweisen. Die Manipulator-Schnittstelle und die Anlagefläche sind vorzugsweise voneinander elektrisch isoliert. Die Manipulator-Schnittstelle kann vorteilhafterweise ein besonders einfaches und schnelles Anschließen des Magnetgreifers an einen Manipulator ermöglichen. Durch die elektrische Isolierung der Manipulator-Schnittstelle und der Anlagefläche voneinander kann verhindert werden, dass eine gegriffene Batteriezelle sich über den Magnetgreifer entlädt. Die Manipulator-Schnittstelle kann als Schnellkupplung, bspw. in Form eines Bajonettverschlusses, ausgebildet sein. Die Manipulator-Schnittstelle kann zum werkzeuglosen Befestigen des Magnetgreifers an dem Manipulator und/oder zum werkzeuglosen Lösen des Magnetgreifers von dem Manipulator ausgebildet sein. Der Manipulator kann ein Roboterarm sein.

In einer Weiterbildung des Magnetgreifers kann der Magnetgreifer eine Adapterplatte mit der Manipulator-Schnittstelle aufweisen. Die Adapterplatte ist vorzugsweise aus einem elektrisch isolierenden Material, insbesondere zum elektrischen Isolieren der Manipulator-Schnittstelle von der Anlagefläche, gebildet. Das Material der Adapterplatte und das Material der Mehrzahl von Zentrierelementen kann das gleiche sein. Das Material der Adapterplatte kann ein Kunststoff, insbesondere ein Polyamid, sein. Die Adapterplatte und die Anlagefläche können an entgegengesetzten Enden des Magnetgreifers angeordnet sein. Die Adapterplatte kann zumindest teilweise eine Stirnseite des Magnetgreifers bilden.

In einer Weiterbildung des Magnetgreifers kann die Adapterplatte zumindest einen Anschluss zum Anschließen einer Versorgungsleitung an der Adapterplatte für das Betreiben des Magnetgreifers und/oder zumindest eine Öffnung zum Durchführen einer Versorgungsleitung durch die Adapterplatte hindurch für das Betreiben des Magnetgreifers und/oder eine Aussparung zum Vorbeiführen einer Versorgungsleitung an der Adapterplatte vorbei für das Betreiben des Magnetgreifers auf. Durch eine Anordnung des Anschlusses, der Öffnung und/oder der Aussparung an der Adapterplatte kann vorteilhafterweise eine besonders kompakte Bauweise des Magnetgreifers erreicht werden. Die Versorgungsleitung kann eine Druckluftleitung zum Versorgen des Magnetgreifers mit Druckluft, eine Stromleitung zum Versorgen des Magnetgreifers mit Strom oder eine Sensorleitung zum Anschließen eines Sensors des Magnetgreifers an eine Auswerteeinheit zum Auswerten des angeschlossenen Sensors sein. Der Anschluss kann zum Anschließen einer Mehrzahl von Versorgungsleitungen an der Adapterplatte für das Betreiben des Magnetgreifers ausgebildet sein. Die Öffnung kann zum Durchführen einer Mehrzahl von Versorgungsleitungen durch die Adapterplatte hindurch für das Betreiben des Magnetgreifers ausgebildet sein. Die Aussparung kann zum Vorbeiführen einer Mehrzahl von Versorgungsleitungen an der Adapterplatte vorbei für das Betreiben des Magnetgreifers ausgebildet sein.

In einer Weiterbildung des Magnetgreifers kann der Magnetgreifer eine Nut zum Aufnehmen eines Sensors und/oder einer Versorgungsleitung aufweisen. Die Nut kann als Kabelkanal wirken oder bezeichnet werden. Die Nut kann sich parallel zu der Längsachse des Magnetgreifers erstrecken. Die Nut kann sich von der Anlagefläche bis zu der Adapterplatte erstrecken.

Die eingangs genannte Aufgabe wird auch durch eine Greifreihe umfassend eine Mehrzahl von zuvor beschriebenen Magnetgreifern gelöst. Die Mehrzahl von Magnetgreifern sind, insbesondere linear, nebeneinander angeordnet. Die Mehrzahl von Magnetgreifern kann derart nebeneinander angeordnet sein, dass alle Anlageflächen der Mehrzahl von Magnetgreifer in einer einzigen Ebene liegen. Der Magnetgreifer kann keine Störkontur aufweisen, wodurch vorteilhafterweise eine besonders kompakte Greifreihe gebildet werden kann. Zwei benachbarte Batteriezellen können somit mit einem geringen Abstand von beispielsweise lediglich 1,6 Millimeter zueinander gegriffen werden.

Die eingangs genannte Aufgabe wird auch durch ein Greifsystem umfassend einen zuvor beschriebenen Magnetgreifer und eine Batteriezelle gelöst. In einer Greifkonfiguration ist die Batteriezelle mittels des Magnetgreifers gegriffen. In der Greifkonfiguration ist die Batteriezelle, insbesondere in einer radialen Richtung der Batteriezelle, von der Mehrzahl der Zentrierelementen umgeben. Durch das Umgeben der Batteriezelle von der Mehrzahl der Zentrierelementen können vorteilhafterweise erhöhte Querkräfte auf die Batteriezelle wirken, ohne dass diese infolge eines Auftretens der Querkräfte die Greifkonfiguration ungewollt verlässt.

In der Greifkonfiguration kann eine Längsachse der Batteriezelle gleich einer Längsachse des Magnetgreifers sein. In der Greifkonfiguration kann die Batteriezelle durch die Magnetwirkung mit einer Magnetkraft gegen die Anlagefläche beaufschlagt sein. In der Greifkonfiguration kann die Batteriezelle nicht durch die Magnetwirkung gegen die Mehrzahl von Zentrierelementen mit einer Kraft beaufschlagt sein.

Eine Kontur der Anlagefläche kann zumindest teilweise einer Kontur der Batteriezelle folgen. Die Kontur der Anlagefläche kann als Negativkontur der Batteriezelle bezeichnet werden.

In einer Weiterbildung des Greifsystems können in der Greifkonfiguration die Mehrzahl von Zentrierelementen und die Batteriezelle in radialer Richtung eine formschlüssige Verbindung bilden. Dadurch wird vorteilhafterweise ein besonders sicheres und zuverlässiges Greifen der Batteriezelle erreicht.

Die eingangs genannte Aufgabe wird auch durch ein Greifreihensystem umfassend eine Mehrzahl von zuvor beschriebenen Greifsystemen auf. Die Mehrzahl von Greifsystemen sind, insbesondere linear, nebeneinander angeordnet. Die Mehrzahl von Magnetgreifern kann derart nebeneinander angeordnet sein, dass alle Anlageflächen der Mehrzahl von Magnetgreifer in einer einzigen Ebene liegen.

Die Erfindung wird im Folgenden anhand der Figuren näher erläutert. Es zeigen:
- Fig. 1: eine schematische Seitenansicht eines Magnetgreifers zum Greifen einer Batteriezelle,
- Fig. 2: eine weitere schematische Seitenansicht des Magnetgreifers von Fig. 1,
- Fig. 3: eine schematische Schnittansicht des Magnetgreifers entlang einer Schnittlinie III-III gemäß Fig. 2,
- Fig. 4: eine schematische Draufsicht auf den Magnetgreifer,
- Fig. 5: eine schematische Schrägansicht des Magnetgreifers,
- Fig. 6: eine schematische Seitenansicht eines Greifsystems mit dem Magnetgreifer von Fig. 1 bis 5,
- Fig. 7: eine schematische Draufsicht auf eine Greifreihe mit einer Mehrzahl von in Fig. 1 bis 5 gezeigten Magnetgreifern,
- Fig. 8: eine schematische Seitenansicht eines Greifreihensystems mit einer Mehrzahl von in Fig. 6 gezeigten Greifsystemen, und
- Fig. 9: eine schematische Schrägansicht des Greifreihensystems von Fig. 8.

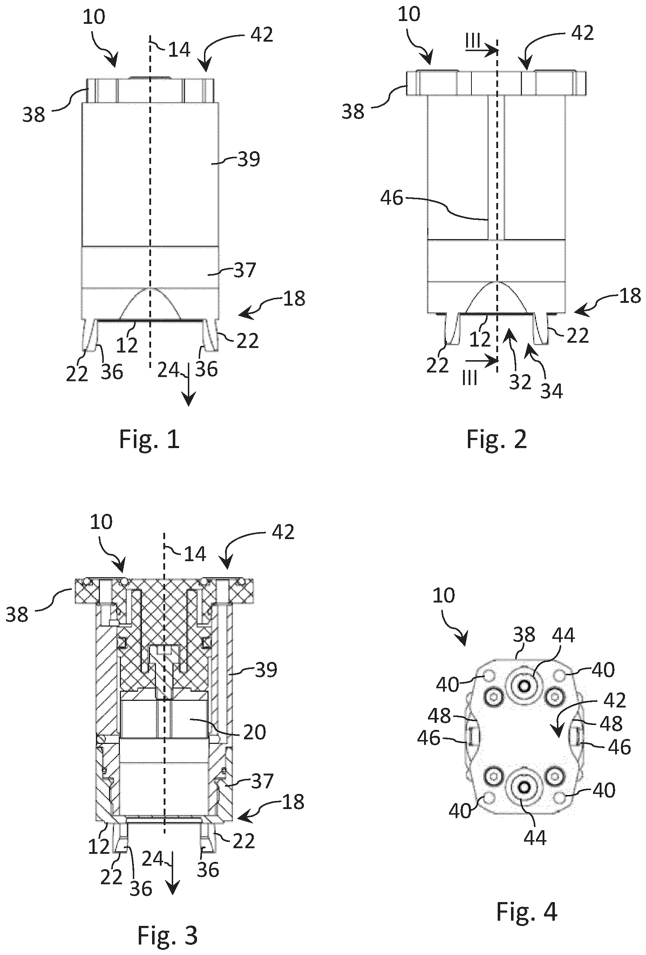

Fig. 1 bis 5 zeigen einen Magnetgreifer 10 zum Greifen einer Batteriezelle (in den Figuren 1 bis 5 nicht dargestellt).

Der Magnetgreifer 10 hat eine Anlagefläche 12. Die Anlagefläche 12 ist zum Kontaktieren der zu greifenden Batteriezelle ausgebildet. Eine mit dem Magnetgreifer 10 gegriffene Batteriezelle liegt insbesondere gegen die Anlagefläche 12 an.

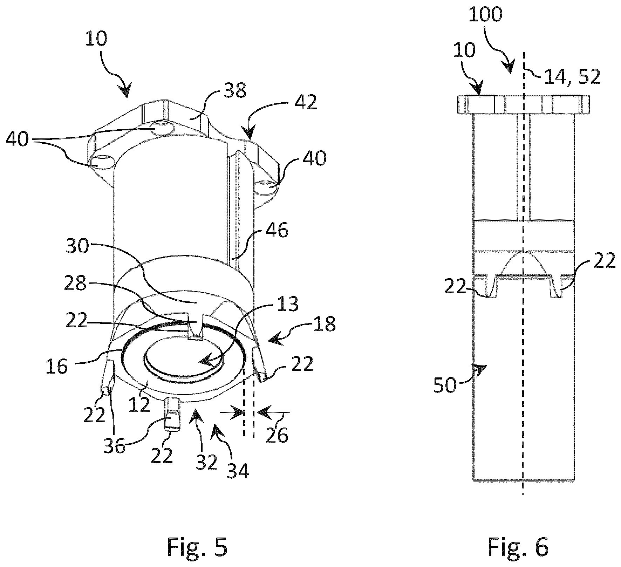

Die Anlagefläche 12 ist im Beispiel kreisringförmig ausgebildet, siehe Fig. 5. Eine Aussparung 13 der Anlagefläche 12 kann dazu ausgebildet sein, einen Pluspol der Batteriezelle abschnittsweise aufzunehmen. Die Anlagefläche 12 ist eben ausgebildet. Die Anlagefläche 12 verläuft senkrecht zu einer Längsachse 14 des Magnetgreifers 10.

Die Anlagefläche 12 wird von einem Anlageabschnitt 16 des Magnetgreifers 10 bereitgestellt. Der Anlageabschnitt 16 ist vorzugsweise aus einem magnetisierbaren Material gebildet.

Die Anlagefläche 12 bildet zumindest abschnittsweise eine Stirnfläche des Magnetgreifers 10. Die Anlagefläche 12 ist an einem Ende 18 des Magnetgreifers 10 angeordnet.

Der Magnetgreifer 10 hat einen Magnet 20. Der Magnet 20 ist zur Bereitstellung einer Magnetwirkung an der Anlagefläche 12 zum Zweck des Greifens der Batteriezelle ausgebildet. Im Beispiel ist der Magnet 20 als Permanentmagnet ausgebildet. Der Magnet 20 ist derart innerhalb des Magnetgreifers 10 angeordnet, dass eine Magnetisierungsrichtung des Magneten 20 orthogonal zu der Längsachse 14 des Magnetgreifers 10 verläuft.

Der Magnet 20 ist innerhalb des Magnetgreifers 10 in Richtung der Längsachse 14 verschiebbar angeordnet. Der Magnet 20 kann zwischen einem Aktivzustand und einem Passivzustand, insbesondere durch Verschieben des Magneten entlang der Längsachse 14, überführt werden. In Fig. 3 ist der Passivzustand dargestellt.

In dem Aktivzustand liegt der Magnet 20 vorzugsweise gegen eine Wandung des Magnetgreifers 10 an, welche den Anlageabschnitt 16 bildet. In dem Aktivzustand des Magnetgreifers 10 durchdringt ein nicht dargestelltes Magnetfeld des Magneten 20 die Anlagefläche 12 derart, dass die zu greifende Batteriezelle mit einer auf die Anlagefläche 12 gerichtete Magnetkraft beaufschlagt ist, die größer als eine Gewichtskraft der Batteriezelle ist.

In dem Passivzustand ist der Magnet 20 von der Wandung derart beabstandet, dass das Magnetfeld die zu greifende Batteriezelle nicht mit einer auf die Anlagefläche 12 gerichtete Magnetkraft beaufschlägt, die größer als die Gewichtskraft der Batteriezelle ist.

Der Magnetgreifer 10 hat eine Mehrzahl von Zentrierelementen 22. In dem dargestellten Beispiel der Fig. 1 bis 5 hat der Magnetgreifer 10 insgesamt vier Zentrierelemente 22. Die Zentrierelemente 22 sind als Auskragungen ausgebildet. Vorzugsweise sind die Zentrierelemente 22 aus einem nicht magnetisierbaren Material gebildet, bspw. Polyamid.

Die Zentrierelemente 22 und die Anlagefläche 12 sind an dem Ende 18 des Magnetgreifers 10 angeordnet. Die Zentrierelemente 22 sind von der Anlagefläche 12 mit einem Abstand 26 beabstandet, siehe Fig. 5. Die Zentrierelemente 22 sind kronenartig um die Anlagefläche 12 angeordnet. Die Anlagefläche 12 ist von den Zentrierelementen 22 in radialer Richtung umgeben. Die Zentrierelemente 22 sind beispielhaft umfangmäßig und gleichmäßig verteilt um die Längsachse 14 des Magnetgreifers 10 angeordnet.

Die Zentrierelemente 22 erstecken sich jeweils zumindest abschnittsweise in eine von der Anlagefläche 12 wegführende Richtung 24. Die Richtung 24 ist parallel zu der Längsachse 14. Die Richtung 24 führt von dem Magnet 20 weg.

Die Zentrierelemente 22 sind an einem äußersten Randbereich eines Querschnitts des Magnetgreifers 10 angeordnet. Eine Oberfläche 28 der Zentrierelementen 22 bildet abschnittsweise eine Mantelfläche 30 des Magnetgreifers 10, siehe Fig. 5.

Die Zentrierelemente 22 definieren einen Aufnahmeraum 32 für die zu greifende Batteriezelle, siehe Fig. 2. Die Zentrierelemente 22 definieren eine Öffnung 34, durch die hindurch die Batteriezelle in den Aufnahmeraum 32 einsetzbar ist.

Die Zentrierelemente 22 sind zum Führen der Batteriezelle zur Anlagefläche 12 und zum Zentrieren der Batteriezelle an der Anlagefläche 12 ausgebildet. Jedes Zentrierelement 22 hat eine Einführungsschräge 36 zum Führen der Batteriezelle zu der Anlagefläche 12.

Jede Einführungsschräge 36 ist dazu ausgebildet, dass die Batteriezelle beim Überführen in den gegriffenen Zustand die Einführungsschräge 36 entlanggleiten kann, bis eine Längsachse der Batteriezelle und die Längsachse 14 deckungsgleich angeordnet sind. Jede Einführungsschräge 36 erstreckt sich von einem Ende des Zentrierelements 22 bis zu einer halben Länge des Zentrierelements 22. Die Einführungsschräge 36 und die Richtung 24 bilden zwischen sich einen Winkel von beispielhaft 15°.

In dem dargestellten Beispiel sind die Zentrierelemente 22 beispielhaft durch einen Aufsatz 37 bereitgestellt, welcher auf ein Gehäuse 39 des Magnetgreifers 10 aufsetzbar, insbesondere aufsteckbar, ist. Der Aufsatz 37 kann beispielsweise als Kunststoff-Spritzgussteil ausgebildet sein.

Der Magnetgreifer 10 hat eine Adapterplatte 38 mit einer Manipulator-Schnittstelle 40. Die Adapterplatte 38 ist aus einem elektrisch isolierenden Material zum elektrischen Isolieren der Manipulator-Schnittstelle 40 von der Anlagefläche 12 gebildet. Das Material der Adapterplatte 38 kann beispielsweise ein Polyamid sein.

Die Adapterplatte 38 und die Anlagefläche 12 sind an entgegengesetzten Enden des Magnetgreifers 10 angeordnet. Die Adapterplatte 38 bildet zumindest teilweise eine Stirnseite 42 des Magnetgreifers 10.

Im Beispiel ermöglicht die Manipulator-Schnittstelle 40 das Herstellen einer Schraubverbindung zwischen dem Magnetgreifer 10 und einem nicht gezeigten Manipulator. Die Manipulator-Schnittstelle 40 hat vier Durchgangslöcher zum Befestigen des Magnetgreifers 10 an den Manipulator mittels Schrauben, siehe Fig. 4. Bei nicht dargestellten Ausgestaltungen sind auch andere Verbindungsmechanismen denkbar, bspw. eine BajonettVerbindung oder eine Steckverbindung.

Die Adapterplatte 38 hat zwei Anschlüsse 44 zum Anschließen von Druckluftleitungen für das Betreiben des Magnetgreifers 10. Jeder der beiden Anschlüsse 44 hat eine Längsachse, die parallel zu der Längsachse 14 des Magnetgreifers 10 angeordnet ist. Über die beiden Anschlüsse 44 kann der Magnetgreifer 10 mit Druckluft versorgt werden. Wird der eine Anschluss 44 mit Druckluft beaufschlagt, wird der Magnetgreifer 10 in den Aktivzustand überführt. Wird der andere Anschluss 44 mit Druckluft beaufschlagt, wird der Magnetgreifer 10 in den Passivzustand überführt.

Der Magnetgreifer 10 hat zwei Nuten 46, die jeweils zum Aufnehmen eines Sensors und/oder einer Versorgungsleitung ausgebildet sind, siehe Fig. 4. Die beiden Nuten 46 sind an gegenüberliegenden Seiten des Magnetgreifers 10 angeordnet. Die beiden Nuten 46 erstrecken sich parallel zu der Längsachse 14 des Magnetgreifers 10.

Die Adapterplatte 38 hat zwei Aussparungen 48, wobei jede Aussparung 48 mit einer der beiden Nuten 46 fluchtet. Aufgrund den beiden Aussparungen 48 ragt die Adapterplatte 38 nicht in einen lichten Querschnitt der Nuten 46. Dadurch kann beispielsweise ein nicht dargestelltes Kabel von einer der beiden Nuten 46 geführt und an der Adapterplatte 38 ungehindert vorbeigeführt sein.

Fig. 6 zeigt ein Greifsystem 100. Das Greifsystem 100 weist den zuvor beschriebenen Magnetgreifer 10 und die Batteriezelle 50 auf.

Die Batteriezelle 50 ist als Batterierundzelle ausgebildet. Die Batteriezelle 50 hat eine zylinderförmige Form. Die Batteriezelle 50 ist zumindest abschnittsweise ferromagnetisch ausgebildet.

Im dargestellten Beispiel der Fig. 6 ist der Magnetgreifer 10 in dem Aktivzustand. Die Batteriezelle 50 ist innerhalb des Aufnahmeraums 32 angeordnet. Die Batteriezelle 50 liegt an der Anlagefläche 12 an. Das Magnetfeld des Magneten 20 durchdringt die Anlagefläche 12 und beaufschlagt die Batteriezelle 50 mit einer auf die Anlagefläche 12 gerichtete Magnetkraft, die größer als eine Gewichtskraft der Batteriezelle 50 ist. Mit anderen Worten, die Batteriezelle 50 ist von dem Magnetgreifer 10 in einer Greifkonfiguration gegriffen.

In der Greifkonfiguration ist eine Längsachse 52 der Batteriezelle 50 gleich der Längsachse 14 des Magnetgreifers 10. In der Greifkonfiguration ist die Batteriezelle 10 in radialer Richtung von den Zentrierelementen 22 unter Bildung einer formschlüssigen Verbindung umgeben.

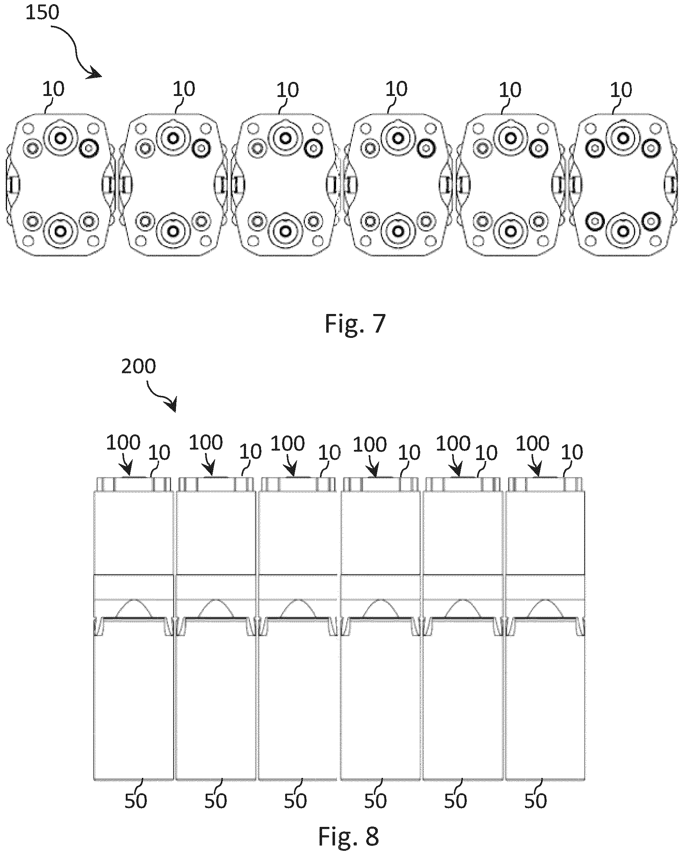

Fig. 7 zeigt eine Greifreihe 150 zum gleichzeitigen Greifen miteinander verblockter Batteriezellen. Die Greifreihe 150 ist aus einer Mehrzahl von zuvor beschriebenen Magnetgreifern 10 gebildet. In dem dargestellten Beispiel besteht die Greifreihe 150 aus sechs Magnetgreifer 10. In einem alternativen Ausführungsbeispiel kann die Greifreihe mehr oder weniger Magnetgreifern aufweisen.

Alle Magnetgreifer 10 der Greifreihe 150 sind vorzugsweise zueinander baugleich. Die Magnetgreifer 10 sind linear nebeneinander angeordnet. Die Magnetgreifer 10 sind derart nebeneinander angeordnet, dass die Anlageflächen 12 aller Magnetgreifer 10 in einer einzigen Ebene liegen. Die Nuten 46 von zwei benachbarten Magnetgreifern 10 sind einander gegenüberliegend angeordnet. Zwischen zwei benachbarten Magnetgreifern 10 besteht vorzugsweise kein berührender Kontakt.

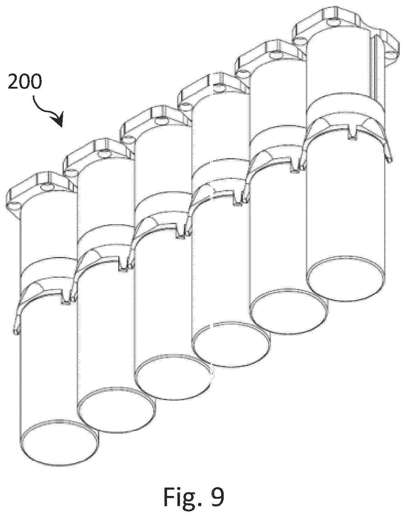

Fig. 8 und 9 zeigen ein Greifreihensystem 200. Das Greifreihensystem 200 hat eine Mehrzahl von zuvor beschriebenen Greifsystemen 100. In dem dargestellten Beispiel besteht das Greifreihensystem 200 aus sechs Greifsystemen 100. In einem alternativen Ausführungsbeispiel kann das Greifreihensystem mehr oder weniger Greifsysteme aufweisen.

Alle Greifsysteme 100 des Greifreihensystems 200 sind im Beispiel zueinander baugleich. Die Magnetgreifer 10 sind linear nebeneinander angeordnet. Die Magnetgreifer 10 sind derart nebeneinander angeordnet, dass die Anlageflächen 12 aller Magnetgreifer 10 in einer einzigen Ebene liegen. Die Nuten 46 von zwei benachbarten Magnetgreifern 10 sind einander gegenüberliegend angeordnet. Zwischen zwei benachbarten Magnetgreifern 10 besteht insbesondere kein berührender Kontakt.

## Patentansprüche

1. Magnetgreifer (10) zum Greifen einer Batteriezelle (50), insbesondere einer Batterierundzelle, aufweisend:
- eine Anlagefläche (12) zum Kontaktieren der zu greifenden Batteriezelle (50), und
- einen Magnet (20) zur Bereitstellung einer Magnetwirkung an der Anlagefläche (12) zum Zweck des Greifens der Batteriezelle (50),
eine Mehrzahl von Zentrierelementen (22) zum Führen der Batteriezelle (50) zur Anlagefläche (12), wobei die Mehrzahl von Zentrierelementen (22) als Auskragungen ausgebildet ist, die kronenartig um die Anlagefläche (12) angeordnet sind und sich jeweils zumindest abschnittsweise in eine von der Anlagefläche (12) wegführende Richtung (24) erstrecken, **gekennzeichnet durch**, dass die Mehrzahl von Zentrierelementen (22) aus einem nicht magnetisierbaren Material gebildet ist,
wobei die Mehrzahl von Zentrierelementen (22) durch einen Aufsatz (37) bereitgestellt ist, welcher auf ein Gehäuse (39) des Magnetgreifers (10) aufsetzbar ist.

2. Magnetgreifer (10) nach Anspruch 1, wobei die Mehrzahl von Zentrierelementen (22) von der Anlagefläche (12) beabstandet ist.

3. Magnetgreifer (10) nach einem der vorherigen Ansprüche, wobei die Mehrzahl von Zentrierelementen (22) einen Aufnahmeraum (32) für die zu greifende Batteriezelle (50) definieren.

4. Magnetgreifer (10) nach einem der vorherigen Ansprüche, wobei jedes Zentrierelement (22) eine Einführungsschräge (36) zum Führen der Batteriezelle (50) zur Anlagefläche (12) aufweist.

5. Magnetgreifer (10) nach einem der vorherigen Ansprüche, wobei der Magnetgreifer (10) eine Manipulator-Schnittstelle (40) zum Befestigen des Magnetgreifers (10) an einem Manipulator aufweist, wobei die Manipulator-Schnittstelle (40) und die Anlagefläche (12) voneinander elektrisch isoliert sind.

6. Magnetgreifer (10) nach Anspruch 5, wobei der Magnetgreifer (10) eine Adapterplatte (38) mit der Manipulator-Schnittstelle (40) aufweist, wobei die Adapterplatte (38) aus einem elektrisch isolierenden Material gebildet ist.

7. Magnetgreifer (10) nach Anspruch 6, wobei die Adapterplatte (38) zumindest einen Anschluss zum Anschließen einer Versorgungsleitung an der Adapterplatte (38) für das Betreiben des Magnetgreifers (10) und/oder zumindest eine Öffnung zum Durchführen einer Versorgungsleitung durch die Adapterplatte (38) hindurch für das Betreiben des Magnetgreifers (10) und/oder eine Aussparung (48) zum Vorbeiführen einer Versorgungsleitung an der Adapterplatte (38) vorbei für das Betreiben des Magnetgreifers (10) aufweist.

8. Magnetgreifer (10) nach einem der vorherigen Ansprüche, wobei der Magnetgreifer (10) eine Nut (46) zum Aufnehmen eines Sensors und/oder einer Versorgungsleitung aufweist.

9. Greifreihe (150), aufweisend eine Mehrzahl von Magnetgreifern (10), die jeweils nach einem der voranstehenden Ansprüche ausgebildet sind, wobei die Mehrzahl von Magnetgreifern (10) nebeneinander angeordnet sind.

10. Greifsystem (100), aufweisend einen Magnetgreifer (10) nach einem der Ansprüche 1 bis 8 und die Batteriezelle (50), wobei in einer Greifkonfiguration die Batteriezelle (50) mittels des Magnetgreifers (10) gegriffen ist, wobei in der Greifkonfiguration die Batteriezelle (50) von der Mehrzahl der Zentrierelementen (22) umgeben ist.

11. Greifsystem (100) nach Anspruch 10, wobei in der Greifkonfiguration die Mehrzahl von Zentrierelementen (22) und die Batteriezelle (50) in radialer Richtung eine formschlüssige Verbindung bilden.

12. Greifreihensystem (200), aufweisend eine Mehrzahl von Greifsystemen (100), die jeweils nach Anspruch 10 oder 11 ausgebildet sind, wobei die Mehrzahl von Greifsystemen (100) nebeneinander angeordnet sind.

## Claims

1. Magnetic gripper (10) for gripping a battery cell (50), in particular a cylindrical battery cell, the magnetic gripper comprising:
- a contact surface (12) for contacting the battery cell (50) to be gripped, and
- a magnet (20) for providing a magnetic effect on the contact surface (12) in order to grip the battery cell (50),
a plurality of centering elements (22) for guiding the battery cell (50) to the contact surface (12), the plurality of centering elements (22) being in the form of projections which are arranged in a crown-like configuration around the contact surface (12) and which each extend at least in portions in a direction (24) leading away from the contact surface (12),
**characterized in that** the plurality of centering elements (22) are made of a non-magnetizable material,
the plurality of centering elements (22) being provided by an attachment (37) which can be placed on a housing (39) of the magnetic gripper (10).

2. Magnetic gripper (10) according to claim 1, wherein the plurality of centering elements (22) are spaced apart from the contact surface (12).

3. Magnetic gripper (10) according to any of the preceding claims, wherein the plurality of centering elements (22) define a receiving space (32) for the battery cell (50) to be gripped.

4. Magnetic gripper (10) according to any of the preceding claims, wherein each centering element (22) comprises an insertion ramp (36) for guiding the battery cell (50) to the contact surface (12).

5. Magnetic gripper (10) according to any of the preceding claims, wherein the magnetic gripper (10) comprises a manipulator interface (40) for attaching the magnetic gripper (10) to a manipulator, wherein the manipulator interface (40) and the contact surface (12) are electrically insulated from each other.

6. Magnetic gripper (10) according to claim 5, wherein the magnetic gripper (10) comprises an adapter plate (38) having the manipulator interface (40), wherein the adapter plate (38) is made of an electrically insulating material.

7. Magnetic gripper (10) according to claim 6, wherein the adapter plate (38) comprises at least one connection for connecting a supply line to the adapter plate (38) in order to operate the magnetic gripper (10) and/or at least one opening for passing a supply line through the adapter plate (38) in order to operate the magnetic gripper (10) and/or a recess (48) for passing a supply line past the adapter plate (38) in order to operate the magnetic gripper (10).

8. Magnetic gripper (10) according to any of the preceding claims, wherein the magnetic gripper (10) comprises a groove (46) for receiving a sensor and/or a supply line.

9. Gripping row (150) comprising a plurality of magnetic grippers (10) which are each designed according to any of the preceding claims, wherein the plurality of magnetic grippers (10) are arranged side by side.

10. Gripping system (100) comprising a magnetic gripper (10) according to any of claims 1 to 8 and the battery cell (50), wherein, in a gripping configuration, the battery cell (50) is gripped by means of the magnetic gripper (10), wherein, in the gripping configuration, the battery cell (50) is surrounded by the plurality of centering elements (22).

11. Gripping system (100) according to claim 10, wherein, in the gripping configuration, the plurality of centering elements (22) and the battery cell (50) form a form-fitting connection in the radial direction.

12. Gripping row system (200) comprising a plurality of gripping systems (100) which are each designed according to claim 10 or 11, wherein the plurality of gripping systems (100) are arranged side by side.

## Revendications

1. Préhenseur magnétique (10) destiné à la préhension d'une cellule de batterie (50), en particulier d'une cellule cylindrique de batterie, comprenant:
- une surface d'appui (12) destinée à entrer en contact avec la cellule de batterie (50) à saisir, et
- un aimant (20) destiné à fournir un effet magnétique sur la surface d'appui (12) afin de saisir la cellule de batterie (50),
une pluralité d'éléments de centrage (22) destinés à guider la cellule de batterie (50) vers la surface d'appui (12), dans lequel la pluralité d'éléments de centrage (22) est conçue en tant que porte-à-faux qui sont disposés à la manière d'une couronne autour de la surface d'appui (12) et s'étendent chacun, au moins par sections, dans une direction (24) s'éloignant de la surface d'appui (12), **caractérisé par le fait que** la pluralité d'éléments de centrage (22) est constituée d'un matériau non magnétisable,
dans lequel la pluralité d'éléments de centrage (22) est fournie par un élément à poser (37) qui peut être posé sur un boîtier (39) du préhenseur magnétique (10).

2. Préhenseur magnétique (10) selon la revendication 1, dans lequel la pluralité d'éléments de centrage (22) sont espacés de la surface d'appui (12).

3. Préhenseur magnétique (10) selon l'une quelconque des revendications précédentes, dans lequel la pluralité d'éléments de centrage (22) définissent un espace de réception (32) pour la cellule de batterie (50) à saisir.

4. Préhenseur magnétique (10) selon l'une quelconque des revendications précédentes, dans lequel chaque élément de centrage (22) comprend une rampe d'insertion (36) destinée à guider la cellule de batterie (50) vers la surface d'appui (12).

5. Préhenseur magnétique (10) selon l'une quelconque des revendications précédentes, dans lequel le préhenseur magnétique (10) comprend une interface de manipulateur (40) destinée à fixer le préhenseur magnétique (10) à un manipulateur, dans lequel ladite interface de manipulateur (40) et la surface d'appui (12) sont électriquement isolées l'une de l'autre.

6. Préhenseur magnétique (10) selon la revendication 5, dans lequel le préhenseur magnétique (10) présente une plaque d'adaptation (38) avec l'interface de manipulateur (40), dans lequel ladite plaque d'adaptation (38) est constituée d'un matériau électriquement isolant.

7. Préhenseur magnétique (10) selon la revendication 6, dans lequel la plaque d'adaptation (38) comprend au moins un raccord pour le raccordement d'une ligne d'alimentation à la plaque d'adaptation (38), destinée à faire fonctionner le préhenseur magnétique (10), et/ou au moins une ouverture pour faire passer une ligne d'alimentation à travers la plaque d'adaptation (38), destinée à faire fonctionner le préhenseur magnétique (10), et/ou un évidement (48) pour faire passer une ligne d'alimentation devant la plaque d'adaptation (38), destinée à faire fonctionner le préhenseur magnétique (10).

8. Préhenseur magnétique (10) selon l'une quelconque des revendications précédentes, dans lequel le préhenseur magnétique (10) présente une rainure (46) destinée à recevoir un capteur et/ou une ligne d'alimentation.

9. Rangée de préhension (150) comprenant une pluralité de préhenseurs magnétiques (10) qui sont chacun configurés selon l'une quelconque des revendications précédentes, dans laquelle la pluralité de préhenseurs magnétiques (10) sont disposés les uns à côté des autres.

10. Système de préhension (100) comprenant un préhenseur magnétique (10) selon l'une quelconque des revendications 1 à 8 et une cellule de batterie (50), dans lequel, dans une configuration de préhension, la cellule de batterie (50) est saisie au moyen du préhenseur magnétique (10), dans lequel, dans la configuration de préhension, la cellule de batterie (50) est entourée par la pluralité d'éléments de centrage (22).

11. Système de préhension (100) selon la revendication 10, dans lequel, dans la configuration de préhension, la pluralité d'éléments de centrage (22) et la cellule de batterie (50) forment une liaison à engagement positif dans la direction radiale.

12. Système de rangées de préhension (200) comprenant une pluralité de systèmes de préhension (100) qui sont chacun configurés selon la revendication 10 ou 11, dans lequel la pluralité de systèmes de préhension (100) sont disposés les uns à côté des autres.
